**Europäisches Patentamt**

**European Patent Office**

**Office européen des brevets**

(19)

(11) Veröffentlichungsnummer: **0 151 443**
A2

(12) ## EUROPÄISCHE PATENTANMELDUNG

(21) Anmeldenummer: 85100797.1

(22) Anmeldetag: 26.01.85

(51) Int. Cl.⁴: **B 23 Q 17/09**

(30) Priorität: 06.02.84 DE 3404009

(43) Veröffentlichungstag der Anmeldung:
14.08.85 Patentblatt 85/33

(84) Benannte Vertragsstaaten:
AT BE CH FR GB IT LI LU NL SE

(71) Anmelder: Erwin Leukhardt GmbH & Co.
Rudolf-Diesel-Strasse 11
D-7200 Tuttlingen(DE)

(72) Erfinder: Wurst, Karl-Heinz, Dipl.-Ing.
Nelkenstrasse 1
D-7015 Korntal-Münchingen 2(DE)

(74) Vertreter: Patentanwälte, Dipl.-Ing. Klaus Westphal Dr.
rer. nat. Bernd Mussgnug Dr. rer. nat. Otto Buchner
Waldstrasse 33
D-7730 Villingen-Schwenningen(DE)

(54) Vorrichtung zum Messen des Drehmoments.

(57) Zum Messen des von der rotierenden Spindel (3) einer Werkzeugmaschine auf das Werkzeug (16) übertragenen Drehmoments, insbesondere zur Werkzeugüberwachung, ist zwischen die Spindel (3) und das Werkzeug (16) ein Adapter (6) wählbar vorgegebener Torsionssteifigkeit eingesetzt, der das Drehmoment von der Spindel (3) auf das Werkzeug (16) überträgt. Mit dem spindelseitigen und dem werkzeugseitigen Ende des Adapters (6) drehfest verbindbare Winkelanzeigeglieder (10, 11) ermöglichen die Bestimmung des Torsionswinkels des Adapters (6). Durch Auswechseln des Adapters (6) kann der Meßbereich den jeweils auftretenden Drehmomenten angepaßt werden.

EP 0 151 443 A2

Dipl. Ing. Klaus Westphal

Dr. rer. nat. Bernd Mussgnug

Dr. rer. nat. Otto Buchner

PATENTANWÄLTE
European Patent Attorneys

Waldstrasse 33

D-7730 VS-VILLINGEN **0151443**

Flossmannstrasse 30 a

D-8000 MÜNCHEN 60

u.Z.: 1004.14

- 1 -

Erwin Leukhardt GmbH & Co.

Rudolf-Diesel-Str. 11

7200 Tuttlingen

Vorrichtung zum Messen des Drehmoments

Die Erfindung betrifft eine Vorrichtung zum Messen des von der rotierenden Spindel einer Werkzeugmaschine auf das Werkzeug übertragenen Drehmoments gemäß dem Oberbegriff des Anspruchs 1.

Bei Werkzeugmaschinen mit angetriebenem Werkzeug, z.B. Bohr- und Fräsmaschinen, ist die Bestimmung des von der Spindel auf das Werkzeug übertragenen Drehmoments von Interesse, da dieses von den Zerspankräften abhängt und daher zur Überwachung des Werkzeugverschleißes ausgenützt werden kann. Es ist bekannt, zur Messung des Drehmoments die durch dieses Drehmoment verursachte Torsion auszunützen.

Postscheckkonto: Karlsruhe 76979-754   Bankkonto: Deutsche Bank AG Villingen (BLZ 694700 39) 146332

Zur Bestimmung der Torsion können Dehungsmeßstreifen verwendet werden, die entweder unmittelbar an der Spindel oder an Meßlagern vorgesehen sind. Die Verwendung von Dehnungsmeßstreifen hat den Nachteil, daß Schleifkontakte zur Abnahme der elektrischen Signale erforderlich sind. Die Schleifkontakte unterliegen einem Verschleiß. · ·

Weiter ist es bekannt, die Torsion einer rotierenden Antriebswelle berührungsfrei dadurch zu bestimmen, daß zwei optische oder magnetische Winkelanzeigeglieder drehfest mit zwei einen axialen Abstand aufweisenden Stellen der Welle verbunden sind und mittels eines Meßkopfes die gegenseitige Winkelverschiebung der beiden Winkelanzeigeglieder gemessen wird.

Die bekannten Vorrichtungen machen eine konstruktive Änderung der Spindel der Werkzeugmaschine notwendig, so daß die Ausrüstung einer Werkzeugmaschine mit dieser Vorrichtung aufwendig ist und insbesondere eine Nachrüstung mit einer solchen Vorrichtung nicht möglich ist. Weiter sind die bekannten Vorrichtungen in ihrer Anwendung auf einen eng begrenzten Belastungsbereich der Werkzeuge beschränkt. Bei einem Werkzeugwechsel, z.B. einem Austausch eines Bohrers gegen einen Bohrer anderen Durchmessers oder gegen einen Fräser, können die bekannten Vorrichtungen nicht mehr eingesetzt werden.

Der Erfindung liegt die Aufgabe zugrunde, eine Vorrichtung der eingangs genannten Gattung zu schaffen, die eine berührungsfreie Messung des Drehmoments ohne konstruktive Änderungen der Spindel und des Werkzeugs und eine einfache Anpassung an unterschiedliche Drehmomentbereiche erlaubt.

Diese Aufgabe wird erfindungsgemäß gelöst durch die Merkmale des kennzeichnenden Teils der Anspruchs 1.

Vorteilhafte Ausführungsformen und Weiterbildungen der Erfindung sind in den Unteransprüchen angegeben.

Die erfindungsgemäße Vorrichtung verwendet das an sich bekannte Prinzip, das übertragene Drehmoment durch die von diesem Drehmoment verursachte Torsion zu bestimmen, wobei die Torsion zwischen zwei Ebenen mit axialem Abstand über die gegenseitige Winkelverdrehung zweier Winkelanzeigeglieder ermittelt wird. Im Gegensatz zum Stand der Technik wird jedoch nicht die Torsion der Spindel bestimmt, sondern die Torsion eines zwischen die Spindel und das Werkzeug eingesetzten Adapters. Da die Torsionsmessung an dem Adapter stattfindet, müssen weder die Spindel noch das Werkzeug für die Drehmomentsmessung konstruktiv geändert werden. Die Drehmomentmessung und damit die Werkzeugüberwachung ist somit bei jeder herkömmlichen, bewährten Werkzeugmaschinenkonstruktion möglich. Insbesondere ist auch eine Nachrüstung vorhandener Werkzeugmaschinen mit der Vorrichtung zur Werkzeugüberwachung ohne konstruktive Änderung möglich.

Weiter ist eine äußerst einfache Anpassung der Vorrichtung an unterschiedliche Drehmomentsbereiche möglich, wie sie bei verschiedenen Werkzeugtypen oder Werkzeugdurchmessern auftreten. Zur Anpassung an unterschiedliche Drehmomentsbereiche muß nur jeweils ein Adapter eingesetzt werden, dessen Torsionssteifigkeit dem jeweiligen Drehmomentsbereich angepaßt ist. Es kann somit für jeden Werkzeugtyp und jeden Drehmomentsbereich ein im wesentlicher gleicher Torsionswinkel zwischen den Winkelanzeigegliedern erhalten werden.

Die Winkelanzeigeglieder, der Meßkopf und die elektronische Auswertung der Meßsignale können daher für jeden beliebigen Drehmomentbereich unverändert eingesetzt werden.

In einer zweckmäßigen Ausführungsform ist zusätzlich ein Trägerteil vorgesehen, das drehfest am werkzeugseitigen Ende der Spindel befestigbar ist. Dieses Trägerteil trägt einerseits das erste Winkelanzeigeglied und andererseits ist das zweite Winkelanzeigeglied auf diesem Trägerteil drehbar gelagert. Der Adapter wird an diesem Trägerteil aufgespannt, wobei sein mit dem Werkzeug drehfest verbundenes Ende formschlüssig mit dem drehbar gelagerten zweiten Winkelanzeigeglied in Eingriff kommt. In dieser Ausführungsform können das Trägerteil mit den zwei Winkelanzeigegliedern und ebenso der ortsfest an dem Spindelgehäuse angebrachte Meßkopf für alle Meßbereiche unverändert montiert bleiben. Zur Anpassung des Meßbereichs muß ausschließlich der Adapter ausgewechselt werden.

Der Adapter bzw. das Trägerteil werden an der Spindel in derselben Weise aufgespannt, wie dies für die Werkzeuge vorgesehen ist. Ebenso ist der Adapter für eine Aufspannung der Werkzeuge in herkömmlicher Weise ausgelegt. Auf diese Weise kann die erfindungsgemäße Vorrichtung ohne konstruktive Änderungen der Spindel und der Werkzeuge eingesetzt werden.

Bei der überwiegend verwendeten Aufspannung der Werkzeuge mittels eines Steilkegelschaftes sind der Adapter und ggf. das Trägerteil als Steilkegelhülsen ausgebildet, die in ihrem äußeren und inneren Kegelwinkel mit dem Steilkegelschaft der Werkzeuge bzw. dem Innenkegel der Spindel übereinstimmen.

In dieser Ausführungsform wird die unterschiedliche Torsionssteifigkeit der Adapter zweckmäßigerweise dadurch realisiert, daß ein axialer Kegelmantelabschnitt bei den einzelnen Adaptern mit unterschiedlicher Wandstärke ausgebildet ist. Dieser Kegelmantelabschnitt ist frei tordierbar, d.h. daß spindelseitige Ende des Adapters ist bis zu diesem Abschnitt drehfest an der Spindel bzw. an dem Trägerteil festgelegt, während das werkzeugseitige Ende des Adapters bis zu diesem Abschnitt drehfest mit dem Werkzeug in Verbindung steht. Um ein seitliches Ausweichen des Adapters und des Werkzeugs bei hohen radial wirkenden Kräften zu verhindern, ist der Adapter zweckmäßigerweise in der Nähe seines werkzeugseitigen Endes radial über ein Radiallager abgestützt, das seine Torsionsbewegung nicht beeinflußt.

Die Winkelanzeigeglieder sind zweckmäßigerweise vom Außenumfang abstehende Scheiben mit Winkelmarken, deren gegenseitige Winkelverschiebung durch einen opto-elektronischen Abtastkopf ermittelt wird. Dadurch ergibt sich eine hohe Winkelauflösung, die auch die Messung kleiner Torsionswinkel erlaubt, wie sie durch die relativ kurze axiale Länge des Adapters bedingt sind.

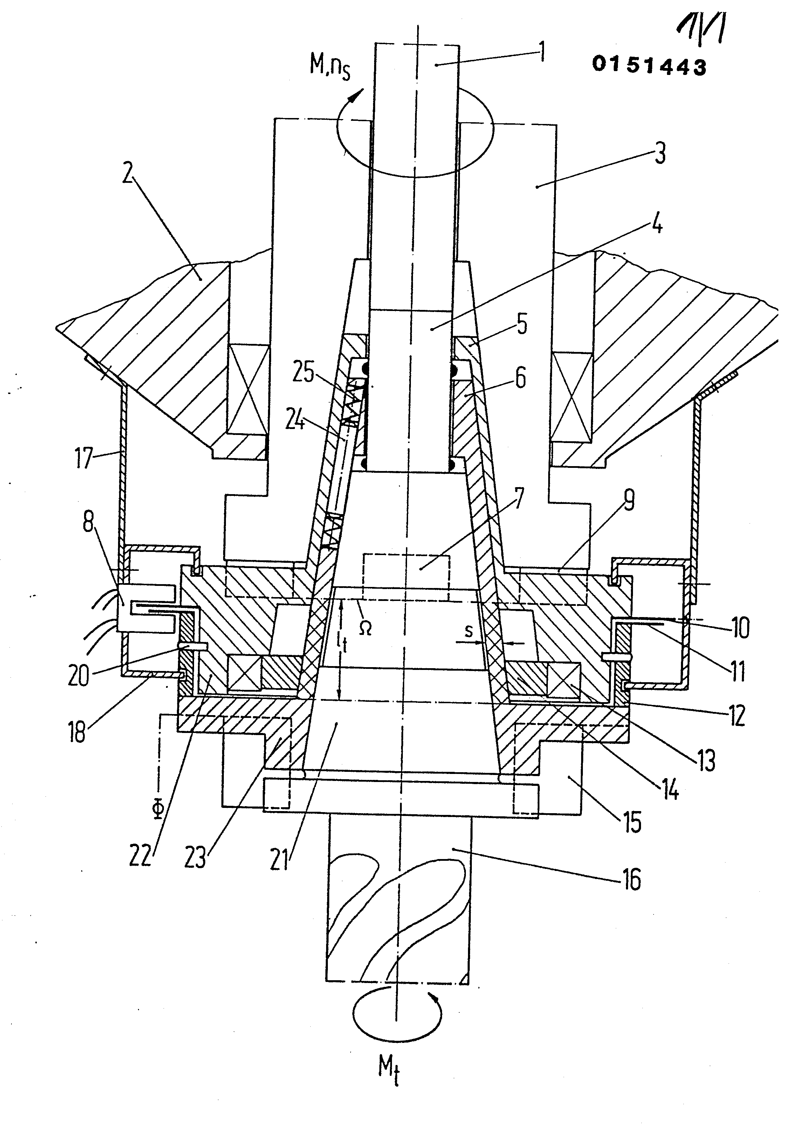

Im folgenden wird die Erfindung anhand eines in der Zeichnung dargestellten Ausführungsbeispiels näher erläutert. Die einzige Figur der Zeichnung zeigt einen Axialschnitt durch eine Vorrichtung zum Messen des Drehmoments.

In der Zeichnung ist die Vorrichtung zum Messen des übertragenen Drehmoments in Verbindung mit einer Bohr- und Fräsmaschine dargestellt. Bei diesem Anwendungsfall können die durch die Zerspankräfte des Werkzeuges erzeugten Torsionsmomente $M_t$ in einem sehr weiten Bereich variieren, der beispielsweise von ca.1 Nm bei einem Bohrer mit einem Durchmesser vom 6,3 mm bis zu ca. 650 Nm bei einem Igelschaftfräser mit einem Durchmesser von 60mm reicht.

In herkömmlicher Weise ist in dem Spindelkasten 2 die rotierend angetriebene Spindel 3 gelagert. Für die Aufspannung der mit einem Steilkegelschaft 21 versehenen Werkzeuge 16 ist die Spindel 3 an ihrem werkzeugseitigen Ende mit einem Innenkegel versehen. Koaxial in der Spindel 3 ist die Einzugsspindel 1 vorgesehen, die zum axialen Festlegen der Werkzeuge 16 in dem Steilkegelschaft 21 verriegelbar ist.

Diese Teile entsprechen vollständig der herkömmlichen Bauweise und müssen zur Aufnahme der nachfolgend beschriebenen erfindungsgemäßen Vorrichtung nicht abgeändert werden.

In den Innenkegel der Spindel 3 wird ein Trägerteil 5 eingesetzt, das die Form einer Steilkegelhülse aufweist. Die innere und die äußere Mantelfläche des Trägerteils 5 entsprechen im Kegelwinkel dem Innenkegel der Spindel 3.

Am werkzeugseitigen Ende weist das Trägerteil 5 einen Flansch 22 auf, der mit erweitertem Innendurchmesser axial in werkzeugsseitiger Richtung verlängert ist. Mitnehmer 9, die z.B. als Nutensteine ausgebildet sind, bewirken einen in Drehrichtung formschlüssigen Eingriff zwischen der werkzeugseitigen Stirnfläche der Spindel 3 und dem Flansch 22 des Trägerteils 5.

In das Trägerteil 5 ist ein Adapter 6 austauschbar eingesetzt, der ebenfalls als Steilkegelhülse ausgebildet ist, deren innerer und äußerer Kegelmantelfläche im Kegelwinkel mit dem Innenkegel der Spindel 3 übereinstimmt. Ein oder mehrere Mitnehmer 7, die z.B. ebenfalls als Nutensteine ausgebildet sein können, bewirken eine in Drehrichtung formschlüssigen Eingriff zwischen der inneren Mantelfläche des Trägerteils 5 und der äußeren Mantelfläche des Adapters 6. An seinem werkzeugseitigen Ende weist der Adapter 6 einen Flansch 23 auf, der den Flansch 22 des Trägerteils 5 radial überdeckt und sich axial an dessen werkzeugseitiger Stirnfläche anschließt.

Der Adapter 6 wird an seinem spindelseitigen Ende durch das Trägerteil 5 abgestützt bis zu der Querschnittsebene $\Omega$, in welcher sich der Innendurchmesser des Trägerteils 5 stufenförmig erweitert. Die Mitnehmer 7 enden werkzeugseitig ebenfalls in dieser Ebene $\Omega$, so daß der Adapter 6 bis zu der Ebene $\Omega$ drehfest mit dem Trägerteil 5 und über dieses mit der Spindel 3 verbunden ist.

Um auf das Werkzeug 16 einwirkende starke radiale Kräfte aufzunehmen, wie sie z.B. durch die Vorschubbewegung eines Fräsers entstehen, ist der Adapter 6 axial unmittelbar hinter seinem Flansch 23 über einen Stützring 14 und ein Radiallager 13 radial an dem Flansch 22 des Trägerteils 5 abgestützt. Das Radiallager 13 erlaubt eine freie Torsion des werkzeugseitigen Endes des Adapters 6.

Das Werkzeug 16 ist mit seinem Steilkegelschaft 21 in den Adapter 6 eingesetzt und steht über Mitnehmer 15 in Drehrichtung formschlüssig mit dem Flansch 23 des Adapters 6 in Eingriff. Der Steilkegelschaft 21 des Werkzeugs 16 sitzt nur zur Zentrierung in dem Adapter 6, das gesamte Drehmoment wird über den Flansch 23 auf das Werkzeug 16 übertragen. Um zu verhindern, daß durch Reibung ein Drehmoment von dem Adapter 6 auf das spindelseitige Ende des Steilkegelschaftes 21 übertragen werden kann, wodurch die Messung verfälscht würde, können erforderlichenfalls Lagernadeln 24 oder ähnliche Elemente in den Kegelmantel des Adapters 6 eingesetzt werden, die durch Federn 25 frei drehbar gehalten werden. Die Lagernadeln 24 stützen den Steilkegelschaft 21 zur Zentrierung radial ab und lassen eine freie Drehung des spindelseitigen Endes des Steilkegelschafts 21 in dem Adapter 6 zu.

Das während des Bearbeitungsvorgangs auf das Werkzeug 16 einwirkende Torsionsmoment $M_t$ tordiert den Adapter 6 auf der axialen Länge $l_t$ zwischen der o.g. Ebene $\Omega$ und der Ebene $\phi$ der spindelseitigen Stirnfläche des drehfest mit dem Werkzeug 16 in Eingriff stehenden Flansches 23. Der Torsionswinkel hängt außer von dem zu bestimmenden Torsionsmoment $M_t$ von der Torsionssteifigkeit des Adapters 6 in dem axialen Abschnitt $l_t$ ab. Diese Torsionssteifigkeit wird wiederum durch die Wandstärke s dieses in der Zeichnung kreuzschraffierten Kegelmantelabschnittes des Adapters 6 bestimmt. Zur Anpassung des Meßbereichs an das jeweils verwendete Werkzeug 16 wird ein Adapter 6 eingesetzt, dessen Wandstärke s und damit dessen Torsionssteifigkeit so gewählt ist, daß sich bei den auftretenden Torsionsmomenten $M_t$ jeweils eine in etwa gleiche Torsion der Ebene $\phi$ gegenüber der Ebene $\Omega$ ergibt.

Der Steilkegelschaft 21 des Werkzeugs 16 wird durch die Einzugspindel 1 in herkömmlicher Weise erfaßt und axial gespannt. Aufgrund des Trägerteils 5 und des Adapters 6 muß die Einzugsspindel eine axiale Verlängerung 4 aufweisen.

Um die Torsion der Ebene $\phi$ gegenüber der Ebene $\Omega$ zu bestimmen, ist an dem Außenumfang des Flansches 22 des Trägerteils 5 ein erstes Winkelanzeigeglied in Form einer Scheibe 10 befestigt. Werkzeugseitig anschließend an die Scheibe 10 ist auf dem Außenumfang des Flansches 22 mittels einer Führungsscheibe 20 drehbar eine Ring 12 gelagert, der ein zweites Winkelanzeigeglied in Form einer Scheibe 11 trägt. Der Ring 12 ragt axial etwas über die werkzeugseitige Stirnfläche des Flansches 22 hinaus und steht in Drehrichtung formschlüssig mit dem Flansch 23 des Adapters 6 in Eingriff. Die Winkelstellung der ersten Scheibe 10 entspricht somit der Torsionslage der Ebene $\Omega$, während die Winkelstellung der zweiten Scheibe 11 der Torsionslage der Ebene $\phi$ entspricht.

Die Scheiben 10 und 11 sind mit Winkelmarkierungen versehen, deren gegenseitige Winkelverschiebung durch einen optoelektronischen Abtastkopf 8 als Meßkopf bestimmt wird. Der Abtastkopf 8 ist in einem Gehäuse 18 befestigt, das den Flansch 22 ringförmig umschließt und die Scheiben 10 und 11 sowie den Abtastkopf 8 gegen Kühlmittel, Späne und Schmutz abdeckt. Das Gehäuse 18 ist mittels Streben 17 ortsfest an dem Spindelkasten 2 befestigt. Labyrinthdichtungen sorgen für eine Abdichtung des Gehäuses 18, ohne daß die freie Drehbarkeit des Flansches 22 und des Ringes 12 behindert wird.

Dipl. Ing. Klaus Westphal

Dr. rer. nat. Bernd Mussgnug

Dr. rer. nat. Otto Buchner

PATENTANWÄLTE
European Patent Attorneys

Waldstrasse 33

D-7730 VS-VILLINGEN

Flossmannstrasse 30a

D-8000 MÜNCHEN 60

Telefon 07721-56007
Telegr. Westbuch Villingen
Telex 5249177 webu d

Telefon 089-832446
Telegr. Westbuch München
Telex 5213177 webu d
Telecop. 089-8344618
(CCITT2) attention webu

— 1 —

u.Z.: 1004.14

**0151443**

## Patentansprüche

1. Vorrichtung zum Messen des von der rotierenden Spindel einer Werkzeugmaschine auf das Werkzeug übertragenen Drehmoments mittels Torsionsbestimmung, gekennzeichnet durch ein mit der Spindel (3) drehfest verbindbares erstes Winkelanzeigeglied (10) und ein mit dem Werkzeug (16) drehfest verbindbares zweites Winkelanzeigeglied (11), durch einen die gegenseitige Winkelstellung der Winkelanzeigeglieder (10, 11) bestimmenden Meßkopf (8) und durch einen Adapter (6) wählbar vorgegebener Torsionssteifigkeit, der auswechselbar zwischen die Spindel (3) und das Werkzeug (16) einsetzbar ist und das Drehmoment von der Spindel auf das Werkzeug überträgt.

2. Vorrichtung nach Anspruch 1, dadurch gekennzeichnet, daß der Adapter (6) an der Spindel (3) in einer der Werkzeugaufspannung entsprechenden Weise aufspannbar ist.

Postscheckkonto: Karlsruhe 76979-754  Bankkonto: Deutsche Bank AG Villingen (BLZ 69470039) 146332

3. Vorrichtung nach Anspruch 1 oder 2, dadurch gekennzeichnet, daß das zweite Winkelanzeigeglied (11) mit dem werkzeugseitigen Ende des Adapters (6) drehfest in Verbindung ist.

4. Vorrichtung nach einem der vorhergehenden Ansprüche, dadurch gekennzeichnet, daß das Werkzeug (16) an dem Adapter (6) in der gleichen Weise wie an der Spindel (3) aufspannbar ist.

5. Vorrichtung nach einem der vorhergehenden Ansprüche, dadurch gekennzeichnet, daß das Werkzeug (16) mittels eines Steilkegelschaftes (21) aufspannbar ist, daß der Adapter (6) eine in der Spindel (3) aufspannbare Steilkegelhülse mit im Kegelwinkel dem Innenkegel der Spindel (3) entsprechenden Innen- und Außenkegelflächen ist und daß ein axialer Kegelmantelabschnitt $(l_t)$ des Adapters (6) mit vorgegebener Torsionssteifigkeit frei tordierbar ist.

6. Vorrichtung nach Anspruch 5, dadurch gekennzeichnet, daß die Torsionssteifigkeit des Adapters (6) durch seine Wandstärke (s) im Bereich des frei tordierbaren Kegelmantelabschnitts $(l_t)$ bestimmt ist.

7. Vorrichtung nach einem der vorhergehenden Ansprüche, dadurch gekennzeichnet, daß ein am werkzeugseitigen Ende der Spindel (3) drehfest befestigbares Trägerteil (5) vorgesehen ist, das das erste Winkelanzeigeglied (10) trägt und an dem der Adapter (6) aufspannbar ist, daß das zweite Winkelanzeigeglied (11) auf dem Trägerteil (5) frei drehbar gelagert ist und daß das Werkzeug (16) mit dem zweiten Winkelanzeigeglied (11) in Drehrichtung

- 3 -

0151443

formschlüssig in Eingriff ist.

8. Vorrichtung nach den Ansprüchen 5 und 7, dadurch gekennzeichnet, daß das Trägerteil (5) eine in der Spindel (3) aufspannbare Steilkegelhülse mit einem Flansch (22) ist, an dessen Außenumfang das erste Winkelanzeigeglied (10) befestigt und an dieses anschließend ein das zweite Winkelanzeigeglied (11) tragender Ring (12) drehbar gelagert ist.

9. Vorrichtung nach Anspruch 8, dadurch gekennzeichnet, daß der Adapter (6) an seinem werkzeugseitigen Ende einen Flansch (23) aufweist, der in Drehrichtung formschlüssig in den das zweite Winkelanzeigeglied (11) tragenden Ring (12) eingreift.

10. Vorrichtung nach Anspruch 9, dadurch gekennzeichnet, daß der Adapter (6) nahe seinem Flansch (23) über ein Radiallager (13) an dem Trägerteil (5) radial abgestützt ist.

11. Vorrichtung nach einem der vorhergehenden Ansprüche, dadurch gekennzeichnet, daß die Winkelanzeigeglieder (10, 11) und der Meßkopf (8) durch ein am Spindelkasten (2) befestigtes, den Meßkopf (8) tragendes Gehäuse (18) abgedeckt sind.

12. Vorrichtung nach einem der vorhergehenden Ansprüche, dadurch gekennzeichnet, daß die Winkelanzeigeglieder (10, 11) Scheiben mit Winkelmarken sind und der Meßkopf (8) ein opto-elektronischer Abtastkopf ist.

0151443